(19) **Europäisches Patentamt**

**European Patent Office**

**Office européen des brevets**

(11) Veröffentlichungsnummer: **0 123 771**
**B1**

(12) **EUROPÄISCHE PATENTSCHRIFT**

(45) Veröffentlichungstag der Patentschrift:
**01.04.87**

(21) Anmeldenummer: **83890239.3**

(22) Anmeldetag: **30.12.83**

(51) Int. Cl.⁴: **B 29 B 7/00,** B 29 B 7/34,
B 29 B 7/42, B 29 B 7/44,
B 29 B 7/48

(54) **Vorrichtung zum Aufbereiten von thermoplastischem Kunststoffgut.**

(30) Priorität: **27.04.83 AT 1524/83**

(43) Veröffentlichungstag der Anmeldung:
**07.11.84 Patentblatt 84/45**

(45) Bekanntmachung des Hinweises auf die Patenterteilung:
**01.04.87 Patentblatt 87/14**

(84) Benannte Vertragsstaaten:
**BE CH DE FR GB IT LI LU NL SE**

(56) Entgegenhaltungen:
**EP - A - 0 045 734**
**EP - A - 0 074 346**
**FR - A - 2 418 707**
**US - A - 4 139 309**

(73) Patentinhaber: **EREMA**
**Engineering-Recycling-Maschinen-Anlagen**
**Gesellschaft m.b.H., Unterfeldstrasse 3 Freindorf,**
**A-4052 Ansfelden-Linz (AT)**

(72) Erfinder: **Wendelin, Georg, Am Hartmayrgut 5,**
**A-4040 Linz (AT)**

(74) Vertreter: **Boeckmann, Peter, Dipl.-Ing. et al,**
**Patentanwälte Dipl.-Ing. Peter Boeckmann, Dipl.-Ing.**
**Leo Brauneiss Strohgasse 10, A-1030 Wien (AT)**

## Beschreibung

Die Erfindung betrifft eine Vorrichtung zum Aufbereiten von thermoplastischem Kunststoffgut, mit einem Aufnahmebehälter, in dessen Bodenbereich ein um eine etwa vertikale Achse drehbares Zerkleinerungs- und Mischwerkzeug angeordnet ist, und mit einem radial zur vertikalen Achse verlaufenden Schneckenextruder, dessen Gehäuse an der Eintrittsseite über eine im Bereich des Zerkleinerungs- und Mischwerkzeuges angeordnete Öffnung in der Wand des Aufnahmebehälters mit dem Behälterinneren verbunden ist.

Eine derartige Vorrichtung ist aus der EP-A-0 045 734 bekannt. Mit einer derartigen Vorrichtung wird das dem Aufnahmebehälter zugeführte Kunststoffgut durch das rotierende Zerkleinerungs- und Mischwerkzeug zerkleinert und in Trombenumlauf gebracht, wobei durch die hiebei entstehende Schneid- und Reibungsenergie eine Erwärmung des Kunststoffgutes bewirkt wird. Da sich diese Schneid- und Reibungsenergie besonders auf grosse, nicht zerkleinerte Teile auswirkt, also bereits zerkleinertes Gut langsamer erwärmt wird, entsteht beim Zerkleinerungs- und Mischvorgang eine Mischung mit ausreichend guter thermischer Homogenität. Diese Mischung wird aus dem Aufnahmebehälter über den Schneckenextruder ausgetragen und hiebei plastifiziert und geformt. Um den Schneckenextruder weitgehend unabhängig vom Füllstand des Aufnahmebehälters gleichmässig beschicken zu können, ist bei der bekannten Vorrichtung der Schneckenextruder mit seinem in den Aufnahmebehälter ragenden Ende mit axialem Abstand oberhalb des Zerkleinerungs- und Mischwerkzeuges angeordnet. Durch die Umlaufbewegung dieses Werkzeuges werden die Gutteilchen in den Bereich einer an der Behälterwand vorgesehenen Leitwand gedrückt, von welcher sie gegen das Aufnahmeende des Schneckenextruders geführt werden. Diese Ausbildung ist nachteilig, weil die von der Behälterwand nach innen vorstehende Leitwand das Absinken des zu zerkleinernden Gutes im Behälter behindert und weil eine mehrmalige Umlenkung des zerkleinerten Gutes nötig ist, bevor dieses vom Schneckenextruder erfasst werden kann. Da die Schnecke um mehr als einen Schneckengang in das Behälterinnere hineinragt, ergibt sich zudem der Nachteil einer Störung des Trombenumlaufes mit damit verbundener inhomogener Mischung und insbesondere bei grossen Gutteilchen die Gefahr einer Blockierung des Zerkleinerungs- und Mischwerkzeuges.

Bei einer anderen bekannten Vorrichtung (FR-A-2 418 707) ist der Schneckenextruder tangential zum Aufnahmebehälter angeordnet und steht mit diesem über eine Öffnung in der Wand des Aufnahmebehälters in Verbindung. Da das Auffüllen bzw. Stopfen des Schneckenextruders durch die auf die Gutteilchen wirkenden Fliehkräfte bestimmt wird, besteht bei dieser bekannten Vorrichtung die Gefahr, dass der Schneckenextruder ungleichmässig aufgefüllt wird, wobei sich auch eine Änderung des Füllstandes im Aufnahmebehälter bemerkbar macht.

Die vorliegende Erfindung hat sich zur Aufgabe gestellt, diese Nachteile zu vermeiden und eine Vorrichtung zum Aufbereiten von thermoplastischem Kunststoffgut zu schaffen, bei welcher die Mischtrombe nicht gestört sowie eine gleichmässige Zerkleinerung und Mischung des Kunststoffgutes sowie eine gleichmässige Zufuhr desselben zum Schneckenextruder sichergestellt ist. Die Erfindung geht hierbei aus von einer Vorrichtung der eingangs beschriebenen Art und besteht im wesentlichen darin, dass der Schneckenextruder auf der Höhe des Zerkleinerungs- und Mischwerkzeuges angeordnet ist, wobei keine Teile des Schneckenextruders von der Innenwand des Aufnahmebehälters abstehen, und dass das freie Ende der Arbeitskanten des Zerkleinerungs- und Mischwerkzeuges in Drehrichtung gesehen so zurückversetzt ist, dass bei Betrieb der Vorrichtung das Kunststoffgut zusätzlich zur Fliehkraftkomponente eine Druckkomponente erhält, durch welche das Kunststoffgut in den Schneckenextruder gedrückt wird. Durch die Vermeidung von Teilen des Schneckenextruders, welche von der Innenwand des Behälters nach innen abstehen, bleibt der Trombenumlauf ungestört und es wird eine gleichmässige Zerkleinerung und Mischung des zugeführten Kunststoffgutes erzielt, wobei durch die bei der Rotation des Zerkleinerungs- und Mischwerkzeuges entstehende Fliehkraft eine gleichmässige Zufuhr des zerkleinerten Gutes zum Schneckenextruder gewährleistet ist, da ja diese Fliehkraft in derselben Richtung wirkt, in welcher die Schnecke des Schneckenextruders das abzuführende Material in den Schneckenextruder hineinzieht. Die Anordnung des Schneckenextruders und des Werkzeuges auf gleicher Höhe macht diese Fliehkraft voll wirksam, ohne dass das Gut umgelenkt werden muss. Zur erwähnten Fliehkraftwirkung trägt auch bei, dass das Gut durch die Ausbildung der Arbeitskanten des Werkzeuges eine zusätzliche Druckkomponente ähnlich einem Spachteleffekt erhält, durch welche Druckkomponente es durch die Öffnung in das Gehäuse des Schneckenextruders gedrückt wird.

Die gleichmässige Zufuhr des zerkleinerten Kunststoffgutes in den Schneckenextruder kann noch dadurch verbessert werden, dass gemäss einem weiteren Merkmal der Erfindung die Schnecke sowie das Gehäuse sich an der Eintrittsseite gegen die Öffnung in der Wand des Aufnahmebehälters trichterförmig erweitern.

Um den Einzug in den Schneckenextruder steuern zu können, kann erfindungsgemäss der Querschnitt der Öffnung durch einen Schieber od. dgl. veränderbar sein.

In der Zeichnung ist die Erfindung an Hand von Ausführungsbeispielen schematisch veranschaulicht.

Fig. 1 zeigt eine erfindungsgemässe Vorrichtung im Vertikalschnitt.

Fig. 2 stellt, gleichfalls im Vertikalschnitt, eine weitere Ausführungsform der erfindungsgemässen Vorrichtung dar.

Fig. 3 zeigt eine abgewandelte Ausführung der Fig. 2, wobei die gleichbleibenden Teile der Vorrichtung teilweise weggelassen wurden. Fig. 4 stellt einen Schnitt nach der Linie IV–IV in Fig. 2 dar.

Die erfindungsgemässe Vorrichtung zum Aufbereiten von Kunststoffgut weist einen Aufnahmebehälter 1 auf, in dessen Bodenbereich ein um eine etwa vertikale Achse drehbares Zerkleinerungs- und Mischwerkzeug 4 vorgesehen ist, welches von einem Antriebsmotore 5 angetrieben wird. Auf der Höhe dieses Zerkleinerungs- und Mischwerkzeuges 4 ist in der Wand des Aufnahmebehälters 1 eine Öffnung 9 vorgesehen, an die das Gehäuse 2 eines Schneckenextruders 15 anschliesst. Im Gehäuse 2 befindet sich eine Extruderschnecke 3, die von einem Antriebsmotore 6 über einen Keilriementrieb 10 angetrieben wird. Das durch den Schneckenextruder geförderte, zerkleinerte und gemischte Kunststoffgut tritt durch die Austrittsöffnung 7 aus dem Schneckengehäuse 2 aus. Am oberen Ende des Aufnahmebehälters 1 ist ein Aufgabetrichter 8 zur Beschickung der Vorrichtung mit dem aufzubereitenden Kunststoffgut vorgesehen.

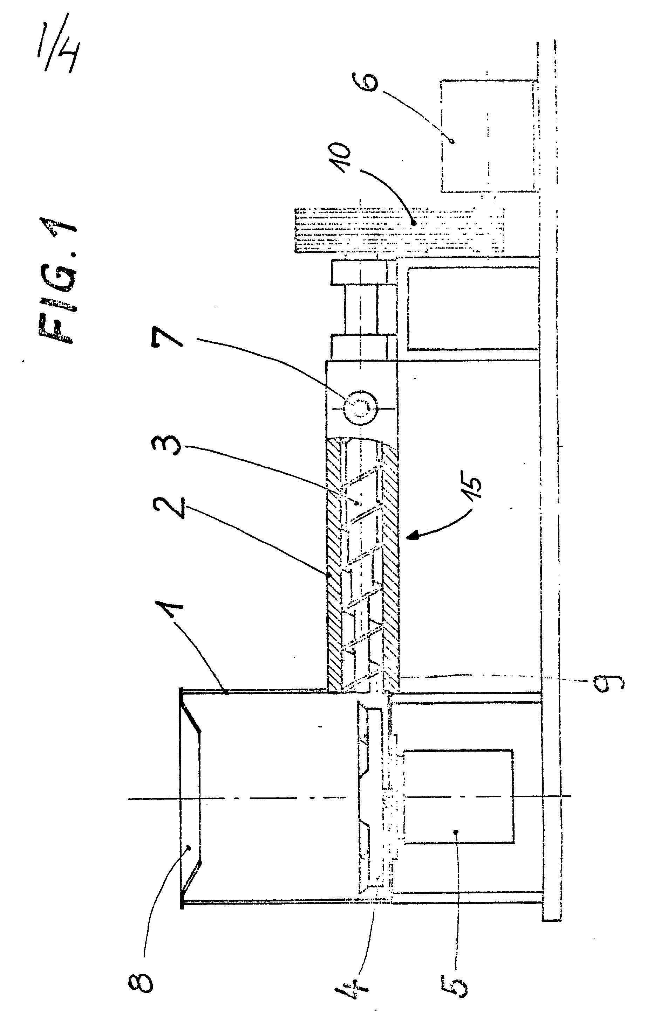

Wie aus den Fig. 1 bis 3 ersichtlich ist, sind sowohl das Gehäuse 2 als auch die Schnecke 3 im Bereich der Öffnung 9 im wesentlichen an die Kontur der Innenwand des Aufnahmebehälters 1 angepasst, fluchten also im wesentlichen mit dieser Kontur, jedoch ist es auch möglich, die Schnecke 3 relativ zu dieser Kontur etwas zurückzuversetzen.

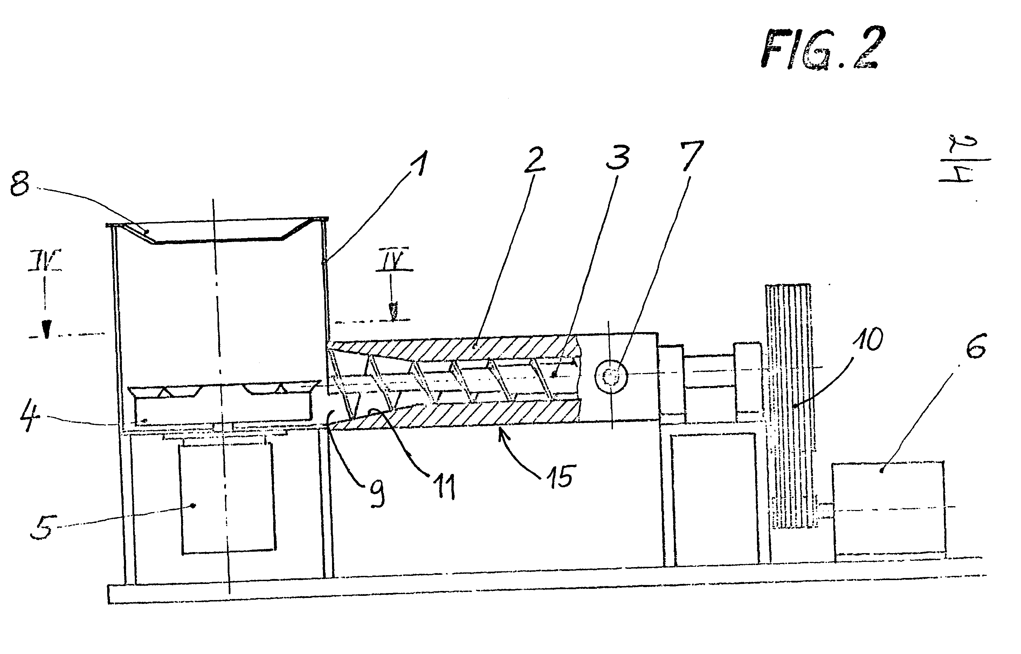

Die Ausführungsform nach Fig. 2 unterscheidet sich von der Ausführungsform nach Fig. 1 dadurch, dass sich sowohl die Schnecke 3 als auch das Gehäuse 2 des Schneckenextruders an der Eintrittsseite bei 11 gegen die Öffnung 9 zu trichterförmig erweitern.

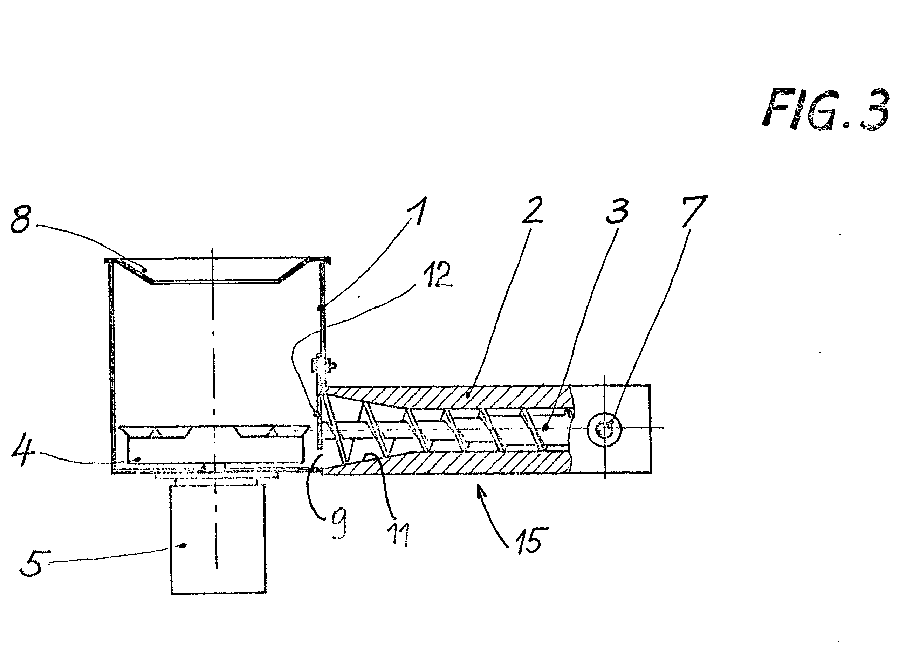

Bei der Ausführungsform nach Fig. 3 ist im Bereich der Öffnung 9 ein Schieber 12 vorgesehen, dessen Stellung derart verändert werden kann, dass er die Öffnung 9 mehr oder weniger weit abdeckt.

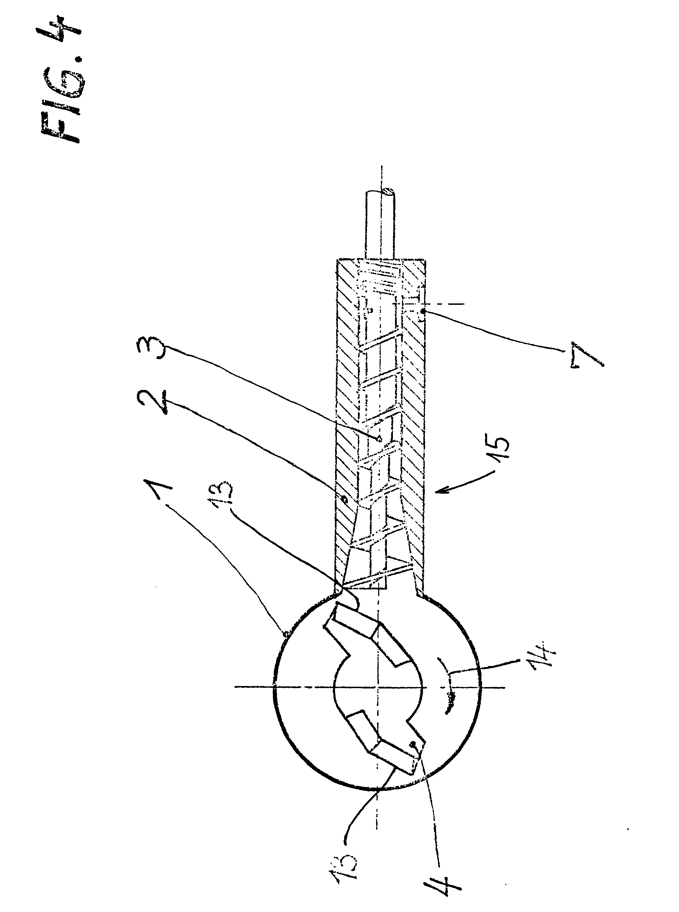

Wie aus Fig. 4 ersichtlich ist, sind die freien Enden der Arbeitskanten 13 des Misch- und Zerkleinerungswerkzeuges, welches in der durch den Pfeil 14 angedeuteten Drehrichtung umläuft, zurückversetzt, wodurch zusätzlich zur Fliehkraftkomponente eine Druckkomponente entsteht, durch welche das zerkleinerte und gemischte Gut über die Öffnung 9 in den Schneckenextruder gedrückt wird.

## Patentansprüche

1. Vorrichtung zum Aufbereiten von thermoplastischem Kunststoffgut, mit einem Aufnahmebehälter (1), in dessen Bodenbereich ein um eine etwa vertikale Achse drehbares Zerkleinerungs- und Mischwerkzeug (4) angeordnet ist, und mit einem radial zur vertikalen Achse verlaufenden Schneckenextruder (15), dessen Gehäuse (2) an der Eintrittsseite über eine im Bereich des Zerkleinerungs- und Mischwerkzeuges (4) angeordnete Öffnung (9) in der Wand des Aufnahmebehälters (1) mit dem Behälterinneren verbunden ist, dadurch gekennzeichnet, dass der Schneckenextruder (15) auf der Höhe des Zerkleinerungs- und Mischwerkzeuges (4) angeordnet ist, wobei keine Teile des Schneckenextruders (15) von der Innenwand des Aufnahmebehälters (1) abstehen, und dass das freie Ende der Arbeitskanten (13) des Zerkleinerungs- und Mischwerkzeuges (4) in Drehrichtung gesehen so zurückversetzt ist, dass bei Betrieb der Vorrichtung das Kunststoffgut zusätzlich zur Fliehkraftkomponente eine Druckkomponente erhält, durch welche das Kunststoffgut in den Schneckenextruder (15) gedrückt wird.

2. Vorrichtung nach Anspruch 1, dadurch gekennzeichnet, dass die Schnecke (3) sowie das Gehäuse (2) des Schneckenextruders (15) sich an der Eintrittsseite gegen die Öffnung (9) in der Wand des Aufnahmebehälters (1) trichterförmig erweitern.

3. Vorrichtung nach Anspruch 1 oder 2, dadurch gekennzeichnet, dass der Querschnitt der Öffnung (9) in der Wand des Aufnahmebehälters (1) durch einen Schieber (12) od. dgl. veränderbar ist.

## Revendications

1. Dispositif pour la préparation de matières synthétiques thermoplastiques, avec un conteneur de réception (1) dans la zone de fond duquel est installé un outil de broyage et de mélange (4) révolutif autour d'un axe approximativement vertical, et avec une extrudeuse à vis sans fin (15) établie radiale par rapport à l'axe vertical, et dont le corps (2), au côté d'entrée, est relié, par l'intermédiaire d'une ouverture (9) pratiquée dans la zone de l'outil de broyage et de mélange (4), à l'intérieur du conteneur, le dispositif étant caractérisé en ce que l'extrudeuse à vis sans fin (15) est installée au niveau de l'outil de broyage et de mélange (4), aucun des éléments de l'extrudeuse à vis sans fin (15) n'étant distant par rapport à la paroi intérieure du conteneur de réception (1); en ce que l'extrémité libre des bords de travail (13) de l'outil de broyage et de mélange (4), vue dans le sens de la rotation, est décalée vers l'arrière de façon que lors du fonctionnement du dispositif, la matière plastique synthétique reçoive, en plus de la composante de centrifugation, une composante de pression en vertu de laquelle la matière plastique synthétique est poussée dans l'extrudeuse à vis sans fin (15).

2. Dispositif selon la revendication 1, caractérisé en ce que la vis sans fin (3) ainsi que le corps (2) de l'extrudeuse à vis sans fin (15), sur le côté d'entrée, s'élargissent en forme d'entonnoir vers l'ouverture (9) dans la paroi du conteneur de réception (1).

3. Dispositif selon la revendication 1 ou 2, caractérisé en ce que la section de l'ouverture (9) dans la paroi du conteneur de réception (1) peut être variée par un registre (12) ou similaire.

## Claims

1. Apparatus for processing thermoplastic synthetic plastics material, comprising a receiving receptacle (1), in the bottom zone of which there is provided a comminuting and mixing tool (4) rotatable around an approximately vertical axis, and a screwtype extruder (15) arranged radially relative to the vertical axis, the housing (2) of the screwtype extruder being connected on its intake side to the interior of the receiving receptacle by an opening (9) in the wall of the receiving receptacle (1), which opening is arranged in the zone of the comminuting and mixing tool (4), characterized in that the screwtype extruder (15) is arranged at the level of the comminuting and mixing tool (4), no parts of the screwtype extruder (15) protruding from the inner wall of the receiving receptacle (1), and that the free end of the working edges (13) of the comminuting and mixing tool (4) is so backwardly displaced, when seen in direction of rotation, that, when the apparatus is in use, in addition to the centrifugal force component, a pressure component acts on the synthetic plastics material, by which pressure component the plastics material is forced into the screwtype extruder (15).

2. Apparatus according to claim 1, characterized in that the screw (3) and the housing (2) of the screwtype extruder (15) enlarge at the intake side towards the opening (5) in the wall of the receiving receptacle (1) in the shape of a funnel.

3. Apparatus according to claim 1 or 2, characterized in that the cross section of the opening (9) in the wall of the receiving receptacle (1) is variable by a gate plate valve (12) or the like.

0 123 771

FIG.1

0 123 771

FIG.2

**FIG. 3**

FIG.4

0 123 771